# EUROPEAN PATENT APPLICATION

(11) **EP 4 579 002 A2**
(43) Date of publication of application: **02.07.2025**
(21) Application number: 24220073.1
(22) Date of filing: 16.12.2024
(51) Int. Cl.: C25D 1/04, C25D 3/38, H01M 4/66, H01M 10/052

(54) **COPPER FOIL, ELECTRODE INCLUDING THE SAME, SECONDARY BATTERY INCLUDING THE SAME, AND METHOD OF MANUFACTURING THE SAME**

(30) Priority: 29.12.2023 KR 20230197789
(71) Applicant: SK Nexilis Co., Ltd., Jeollabuk-do 56137 (KR)
(72) Inventor: JIN, Shan Hua, Jeongeup-si 56137 (KR)
(74) Representative: Ter Meer Steinmeister & Partner

(57) **Abstract**

One embodiment of the present disclosure provides a copper foil including a copper film having a matte surface and a shiny surface, and a protective layer disposed on the copper film, wherein the copper film includes copper and non-copper elements, and the non-copper elements include carbon (C), nitrogen (N), and oxygen (O).

## Description

This application claims the benefit of the Korean Patent Applications No. 10-2023-0197789 filed on December 29, 2023.

### BACKGROUND

### Field of the Invention

The present disclosure relates to a copper foil, an electrode including the same, a secondary battery including the same, and a method of manufacturing the same. More specifically, the present disclosure relates to a copper foil that is prevented from curling, an electrode including the same, a secondary battery including the same, and a method of manufacturing the same.

### Discussion of the Related Art

Secondary batteries are types of energy conversion devices that convert electrical energy into chemical energy, store the chemical energy therein, and then convert the chemical energy back into the electrical energy when electricity is needed, thereby generating electricity. The secondary batteries are used as energy sources for electric vehicles as well as portable electronic products such as mobile phones, laptop computers, and the like. The secondary batteries are rechargeable and thus are also referred to as rechargeable batteries.

As secondary batteries that have economic and environmental advantages over disposable primary batteries, there are lead-acid batteries, nickel-cadmium secondary batteries, nickel hydrogen secondary batteries, and lithium secondary batteries.

In particular, lithium secondary batteries may store a relatively large amount of energy relative to the size and weight thereof compared to other secondary batteries. Accordingly, in the field of information communication devices in which portability and mobility are important, the lithium secondary batteries are preferred, and an application range thereof is also expanding to energy storage devices for hybrid vehicles and electric vehicles.

Lithium secondary batteries are repeatedly used in each cycle including charging and discharging. When a certain device is operated with a fully charged lithium secondary battery, the lithium secondary battery should have a high charge/discharge capacity in order to increase an operating time of the device. Accordingly, research to satisfy ever-increasing expectations (needs) of consumers for charge/discharge capacity of a lithium secondary battery is continuously required.

Such a secondary battery includes a negative electrode current collector made of a copper foil, and among copper foils, an electrolytic copper foil is widely used as a negative electrode current collector of a secondary battery. Along with an increase in demand for secondary batteries, there is an increase in demand for secondary batteries with high capacity, high efficiency, and high quality, and thus, there is a need for copper foils capable of improving characteristics of secondary batteries. In particular, there is a need for electrolytic copper foils that can ensure high capacity of secondary batteries and enable secondary batteries to stably maintain capacity and performance.

Meanwhile, as copper foils become smaller in thickness, the amount of active materials that can be included in the same space may be increased, and the number of current collectors may be increased, and thus, the capacity of secondary batteries can be increased. However, as the copper foils become smaller in thickness, curling occurs, and thus, when the copper foil is wound, defects such as tears or wrinkles of the copper foil occur due to curling of an edge, and accordingly, there is difficulty in manufacturing copper foils in the form of a very thin film. Accordingly, in order to manufacture a copper foil having a very thin thickness, the curling of the copper foil should be prevented.

### SUMMARY

One or more of these objects are solved by the features of the independent claims. Accordingly, the present disclosure relates to a copper foil, an electrode including the same, a secondary battery including the same, and a method of manufacturing the same, which may prevent problems caused by the above limitations and disadvantages of the related art.

In addition to the above-mentioned aspects of the present disclosure, other features and advantages of the present disclosure will be described below, or will be clearly understood by those skilled in the art from the following description.

One embodiment of the present disclosure provides a copper foil including a copper film having a matte surface and a shiny surface, and a protective layer disposed on the copper film, wherein the copper film includes copper and non-copper elements, and the non-copper elements include carbon (C), nitrogen (N), and oxygen (O).

The copper film may include 0.05 to 0.2 at% of carbon (C), 0.01 to 0.05 at% of nitrogen (N), 0.1 to 0.5 at% of oxygen (O), and less than 0.01 at% of sulfur (S). In this disclosure, at% may refer to atom percentage.

The copper film may not include sulfur (S).

The protective layer may include at least one of a chromium compound, a silane compound, and a nitrogen compound.

Another embodiment of the present disclosure provides a method of manufacturing a copper foil, e.g. a copper foil according to any one of the herein described embodiments, the method including: preparing an electrolyte including copper ions, forming a copper film, and forming a protective layer on the copper film, wherein the forming of the copper film includes allowing a cathode plate and a rotating anode drum disposed to be spaced apart from each other in an electrolyte in an electrolytic cell to conduct current to form the copper film on the rotating anode drum, the electrolyte includes 70 to 150 g/L of copper ions, 80 to 150 g/L of sulfuric acid, 15 to 25 ppm of chlorine (Cl), and an organic additive, the organic additive includes a polishing agent (component A), a moderator (component B), and a leveling agent (component C), and the leveling agent (component C) includes a polypropylene glycol (PPG) derivative.

The polishing agent (component A) may include sulfonic acid or a metal salt thereof.

The moderator (component B) may include a non-ionic water-soluble polymer.

In the PPG derivative, an end group may be substituted with a saturated hydrocarbon or a functional group.

The functional group may be at least one of an ethylene group, an acrylic group, and a bisphenol group.

The preparing of the electrolyte may include filtering a first electrolyte transferred from a storage tank using carbon to form a second electrolyte.

The preparing of the electrolyte may include adding the leveling agent (component C) to the second electrolyte to form the electrolyte.

Still embodiment of the present disclosure provides an electrode for a secondary battery including a copper foil, in particular a copper foil according to any one of the herein described embodiments, and an active material layer disposed on at least one surface of the copper foil.

Yet embodiment of the present disclosure provides a secondary battery including a cathode providing lithium ions during charging, an anode providing electrons and lithium ions during discharging, an electrolyte disposed between the cathode and the anode and providing an environment in which the lithium ions can move, and a separator that electrically insulates the cathode and the anode. The anode and/or the cathode may include a copper foil, in particular a copper foil according to any one of the herein described embodiments, and an active material layer disposed on at least one surface of the copper foil.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a cross-sectional view of a copper foil according to one embodiment of the present disclosure;
FIG. 2 is a cross-sectional view of an electrode for a secondary battery according to another embodiment of the present disclosure;
FIG. 3 is a cross-sectional view of an electrode for a secondary battery according to still another embodiment of the present disclosure;
FIG. 4 is a schematic cross-sectional view of a secondary battery according to yet another embodiment of the present disclosure;
FIG. 5 illustrates a copper foil manufacturing apparatus according to yet another embodiment of the present disclosure; and
FIG. 6 is a schematic diagram illustrating a circulation process of an electrolyte according to the present disclosure.

### DETAILED DESCRIPTION OF THE DISCLOSURE

Hereinafter, embodiments of the present disclosure will be described in detail with reference to the accompanying drawings. However, the embodiments described below are presented only for illustrative purposes to facilitate a clear understanding of the present disclosure and do not limit the scope of the present disclosure.

Shapes, sizes, ratios, angles, numbers, and the like disclosed in the drawings for describing the embodiments of the present disclosure are illustrative, and thus the present disclosure is not limited to the details illustrated in the drawings. Throughout the present specification, the same components may be referred to by the same reference numerals. In describing the present disclosure, detailed descriptions of related known technologies will be omitted when it is determined that they may unnecessarily obscure the gist of the present disclosure.

When terms "including," "having," "consisting of," and the like described in the present specification are used, other parts may be added unless the term "only" is used herein. When a component is expressed in the singular form, the plural form is included unless otherwise specified. In addition, in interpreting a component, it is interpreted as including an error range even when not explicitly stated.

In describing a positional relationship, for example, when a positional relationship of two parts is described as being "on," "above," "below, "next to," or the like, unless "immediately" or "directly" is used, one or more other parts may be located between the two parts.

Spatially relative terms, such as "below," "beneath," "lower," "above," "upper" and the like, may be used herein for ease of description to describe one element or component's relationship to another element(s) or component(s) as illustrated in the drawings. It will be understood that the spatially relative terms are intended to include different orientations of the element in use or operation in addition to the orientation illustrated in the drawings. For example, when an element in the drawings is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when a temporal relationship is described as being "after," "subsequent," "next to," "prior to," or the like, unless "immediately" or "directly" is used, cases that are not continuous may also be included.

In order to describe various components, terms such as "first," "second," and the like are used, but these components are not limited by these terms. These terms are only used to distinguish one component from another component. Therefore, a first component described below may be a second component within the technical idea of the present disclosure.

The term "at least one" should be understood to include all possible combinations from one or more related items. For example, the meaning of "at least one of first, second, and third items" may mean all combinations of two or more items of the first, second and third items as well as each of the first, second and third items.

The features of various embodiments of the present disclosure may be partially or wholly coupled to or combined with each other, and may be various technically linked or operated, and each of the embodiments may be implemented independently of each other or may be implemented together in a related relationship.

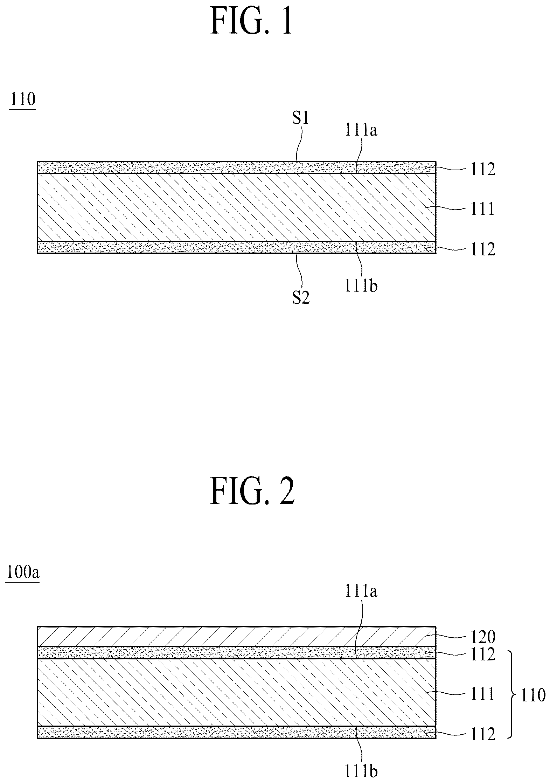

FIG. 1 is a cross-sectional view of a copper foil 110 according to one embodiment of the present disclosure.

Referring to FIG. 1, the copper foil 110 of the present disclosure includes a copper film 111 including copper in an amount of 99.9% or more by weight. Referring to FIG. 1, the copper foil 110 of the present disclosure includes the copper film 111 and a protective layer 112 disposed on the copper film 111. FIG. 1 illustrates a configuration in which the protective layers 112 are disposed on both surfaces of the copper film 111. However, one embodiment of the present disclosure is not limited thereto, and although not shown in the drawing, the protective layer 112 may be disposed on one surface of the copper film 111.

The copper film 111 may be formed on a rotating anode drum through electroplating and may have a shiny surface 111b that is in direct contact with the rotating anode drum in an electroplating process and a matte surface 111a at an opposite side of the shiny surface 111b.

The protective layer 112 is formed by electrodepositing an anticorrosion material on the copper film 111. The anticorrosion material may include at least one of a chromium compound, a silane compound, and a nitrogen compound. The protective layer 112 increases a lifespan of the copper foil 110 itself as well as a lifespan of a final product including the same by preventing oxidation and corrosion of the copper film 111 and enhancing heat resistance.

According to one embodiment of the present disclosure, a copper foil 110 has a first surface S1 in a direction of a matte surface 11 1a of a copper film 111 and a second surface S2 in a direction of a shiny surface 111b.

According to one embodiment of the present disclosure, the copper film 111 of the copper foil 110 may include copper (Cu) and non-copper elements, and the non-copper elements may include carbon (C), nitrogen (N), and oxygen (O).

Specifically, according to one embodiment of the present disclosure, the copper film 111 of the copper foil 110 may include 0.05 to 0.2 at% of carbon (C), 0.01 to 0.05 at% of nitrogen (N), 0.1 to 0.5 at% of oxygen (O), and less than 0.01 at% of sulfur (S).

In this case, when a content of each of carbon (C), nitrogen (N), oxygen (O), and sulfur (S) in the copper film 111 satisfies the above range, curling may be suppressed or prevented from occurring in the copper foil 110 while crystals of the copper film 111 are formed.

On the other hand, when the content of any one of carbon (C), nitrogen (N), and oxygen (O) in the copper film 111 is less than the above range, for example, when carbon (C) is included at less than 0.05 at%, nitrogen (N) is included at less than 0.01 at%, or oxygen (O) is included at less than 0.1 at%, it may be difficult to form the crystals of the copper film 111.

Further, when the content of any one of carbon (C), nitrogen (N), oxygen (O), and sulfur (S) in the copper film 111 is greater than the above range, for example, when carbon (C) exceeds 0.2 at%, nitrogen (N) exceeds 0.05 at%, oxygen (O) exceeds 0.5 at%, or sulfur (S) exceeds 0.01 at%, since excessive impurities are added to the copper film 111, curling may occur in the copper foil 110.

Thus, in order to suppress the occurrence of curling in the copper foil 110 or to form the crystals of the copper film 111, the copper film 111 of the copper foil 110 needs to include 0.05 to 0.2 at% of carbon (C), 0.01 to 0.05 at% of nitrogen (N), 0.1 to 0.5 at% of oxygen (O), and less than 0.01 at% of sulfur (S).

According to one embodiment of the present disclosure, the copper film 111 of the copper foil 110 may not include sulfur (S). Specifically, when the copper film 111 of the copper foil 110 does not include sulfur (S), the occurrence of curling in the copper foil 110 may be suppressed or prevented.

On the other hand, when the copper film 111 of the copper foil 110 includes sulfur (S), the sulfur (S) causes the surface properties of the copper film 111 to be unevenly formed compared to other non-copper elements excluding sulfur (S), and accordingly, curling may occur in the copper foil 110.

Accordingly, in order to suppress or prevent the occurrence of curling in the copper foil 110, the copper film 111 needs to not include sulfur.

The copper foil 110 according to one embodiment of the present disclosure has a thickness of 4 µm to 35 µm. When the copper foil 110 is used as a current collector of an electrode in a secondary battery, as the thickness of the copper foil 110 becomes smaller, more current collectors can be accommodated in the same space, which is advantageous for high capacity of the secondary battery. However, the manufacture of the copper foil 110 having a thickness of less than 4 µm causes a decrease in workability.

On the other hand, when the secondary battery is manufactured with the copper foil 110 having a thickness exceeding 35 µm, it becomes difficult to achieve high capacity due to the thick copper foil 110.

Hereinafter, an electrode 100 including the copper foil 110 of the present disclosure and a secondary battery including the electrode 100 will be described in detail.

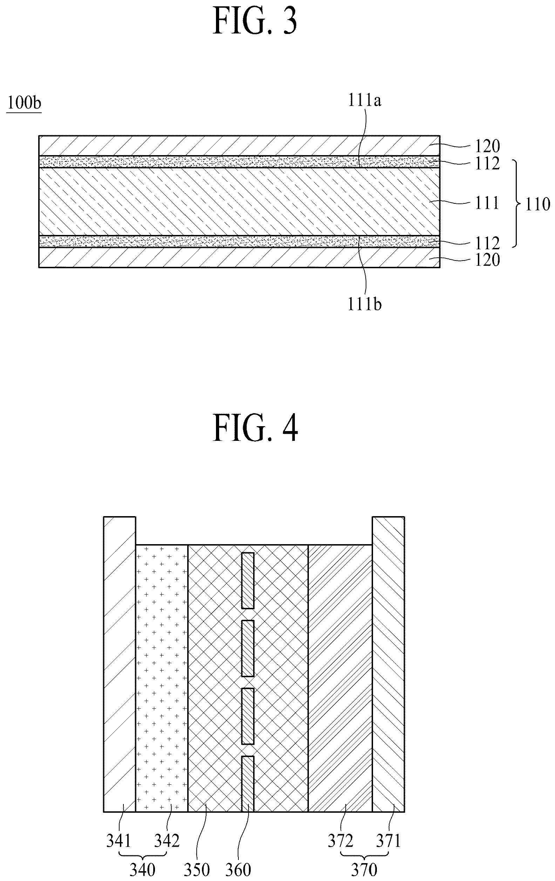

FIG. 2 is a cross-sectional view of an electrode 100a for a secondary battery according to one embodiment of the present disclosure. FIG. 3 is a cross-sectional view of an electrode 100b for a secondary battery according to another embodiment of the present disclosure.

As illustrated in FIG. 2, the electrode 100a for a secondary battery according to one embodiment of the present disclosure includes the copper foil 110 of one of the above-described embodiments of the present disclosure and an active material layer 120.

FIG. 2 illustrates a configuration in which the active material layer 120 is formed on one surface of the copper foil 110. However, the present disclosure is not limited thereto, and referring to FIG. 3, the active material layer 120 may be formed on each of both surfaces of the copper foil 110.

Generally, in a lithium secondary battery, an aluminum foil is used as a cathode current collector coupled to a cathode active material, and the copper foil 110 is used as an anode current collector coupled to an anode active material.

According to one embodiment of the present disclosure, the electrode 100 for a secondary battery is an anode, the copper foil 110 is used as an anode current collector, and the active material layer 120 includes an anode active material.

In order to secure high capacity of a secondary battery, the active material layer 120 of the present disclosure may be formed of a composite of carbon and metal. The metal may include, for example, at least one of silicon (Si), germanium (Ge), tin (Sn), lithium (Li), zinc (Zn), magnesium (Mg), cadmium (Cd), cerium (Ce), nickel (Ni), and iron (Fe), and preferably, may include Si and/or Sn.

FIG. 4 is a schematic cross-sectional view of a secondary battery according to one embodiment of the present disclosure.

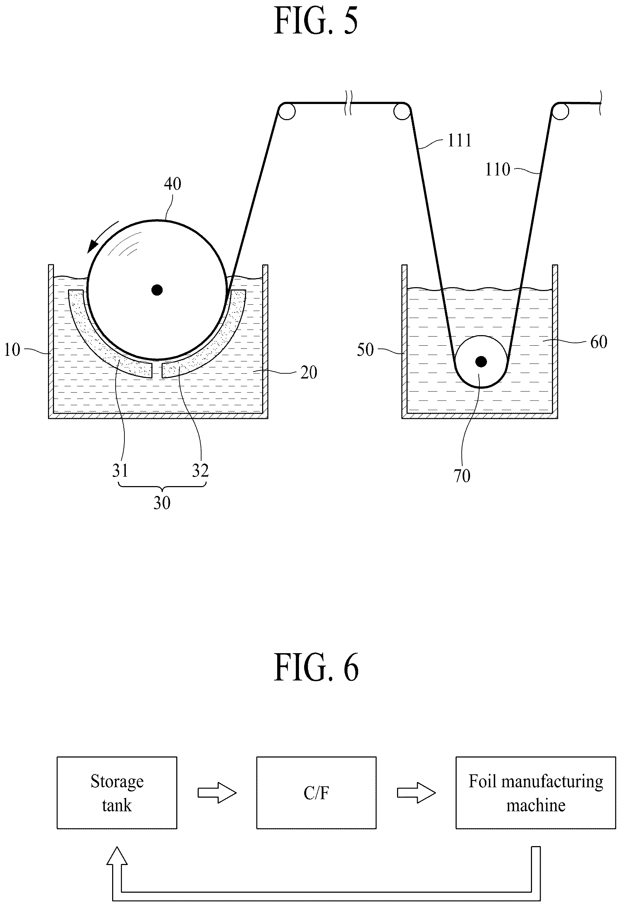

Referring to FIG. 4, the secondary battery includes a cathode 370, an anode 340, an electrolyte 350 disposed between the cathode 370 and the anode 340 to provide an environment in which ions are movable, and a separator 360 electrically insulating the cathode 370 and the anode 340. Here, the ions moving between the cathode 370 and the anode 340 are, for example, lithium ions. The separator 360 separates the cathode 370 and the anode 340 in order to prevent charges generated in one electrode from being uselessly consumed by moving to another electrode through the inside of the secondary battery. Referring to FIG. 5, the separator 360 is disposed in the electrolyte 350.

The cathode 370 includes a cathode current collector 371 and a cathode active material layer 372, and an aluminum foil may be used as the cathode current collector 371.

The anode 340 includes an anode current collector 341 and an anode active material layer 342, and the copper foil 110 may be used as the anode current collector 341.

According to one embodiment of the present disclosure, the copper foil 110 disclosed in FIG. 1 may be used as the anode current collector 341. In addition, the electrode 100a or 100b for a secondary battery illustrated in FIG. 2 or 3 may be used as the anode 340 of the secondary battery illustrated in FIG. 4.

Hereinafter, a method for manufacturing the copper foil 110 of the present disclosure will be described in detail with reference to FIGS. 5 and 6.

The method for manufacturing the copper foil 110 of the present disclosure includes forming a copper film 111, and forming a protective layer 112 on the copper film 111.

The method of the present disclosure includes forming the copper film 111 on a rotating anode drum 40 by electrically conducting a cathode plate 30 and the rotating anode drum 40, which are disposed to be spaced apart from each other in an electrolyte 20 in an electrolytic cell 10.

As illustrated in FIG. 5, the cathode plate 30 may include first and second cathode plates 31 and 32 electrically insulated from each other.

The forming of the copper film 111 may be performed by forming a seed layer through electrical conduction between the first cathode plate 31 and the rotating anode drum 40, and then growing the seed layer through electrical conduction between the second cathode plate 32 and the rotating anode drum 40.

A current density provided by each of the first and second cathode plates 31 and 32 may be 30 to 130 ASD (A/dm2).

When the current density provided by each of the first and second cathode plates 31 and 32 is less than 30 ASD, a surface roughness of the copper foil 110 is reduced, and thus an adhesion between the copper foil 110 and the active material layer 120 may not be sufficient.

On the other hand, when the current density provided by each of the first and second cathode plates 31 and 32 is greater than 130 ASD, a surface of the copper foil 110 may be rough, and thus the active material may not be smoothly coated.

The surface characteristics of the copper film 111 may be changed according to a buffing or polishing degree of a surface of the rotating anode drum 40. For example, the surface of the rotating anode drum 40 may be polished using a polishing brush having a grit of #800 to #3000.

In the process of forming the copper film 111, the electrolyte 20 is maintained at a temperature of 40 °C to 60 °C. More specifically, the temperature of the electrolyte 20 may be maintained at 50 °C or higher. At this time, the physical, chemical, and electrical characteristics of the copper film 111 may be controlled by adjusting a composition of the electrolyte 20.

According to one embodiment of the present disclosure, an electrolyte 20 may include copper ions, sulfuric acid, chlorine (Cl), and an organic additive.

In order to facilitate the formation of the copper film 111 by electrodeposition of copper, a concentration of copper ions and a concentration of sulfuric acid in the electrolyte 20 are adjusted to 70 to 150 g/L and 80 to 150 g/L, respectively.

In one embodiment of the present disclosure, chlorine (Cl) includes both chlorine ions (Cl-) and chlorine atoms present in the molecule. Chlorine (Cl) may be used, for example, to remove silver (Ag) ions introduced into the electrolyte 20 in a process of forming the copper film 111. Specifically, chlorine (Cl) may precipitate silver (Ag) ions in the form of silver chloride (AgCl). This silver chloride (AgCl) may be removed by filtering.

When the concentration of chlorine (Cl) is less than 15 ppm, the removal of silver (Ag) ions is not smoothly performed. On the other hand, when the concentration of chlorine (Cl) exceeds 25 ppm, unnecessary reactions due to excessive chlorine (Cl) may occur. Accordingly, the concentration of chlorine (Cl) in the electrolyte 20 is adjusted to a range of 15 to 25 ppm.

According to one embodiment of the present disclosure, the electrolyte 20 may include an organic additive.

The organic additive included in the electrolyte 20 includes a polishing agent (component A), a moderator (component B), and a leveling agent (component C).

The polishing agent (component A) includes sulfonic acid or a metal salt thereof. The polishing agent (component A) may have a concentration of 1 to 20 ppm in the electrolyte 20.

The polishing agent (component A) may increase the charge amount of the electrolyte 20 to increase an electrodeposition rate of the copper, improve curl characteristics of the copper foil, and enhance the gloss of the copper foil 110. When the concentration of the polishing agent (component A) is less than 1 ppm, the gloss of the copper foil 110 is reduced, and when the concentration of the polishing agent (component A) exceeds 20 ppm, the weight of the copper foil 110 changes after immersion, or surface roughness changes may occur.

The polishing agent may include at least one of, for example, bis-(3-sulfopropyl)-disulfide disodium salt, 3-mercapto-1-propanesulfonic acid, 3-(N,N-dimethylthiocarbamoyl)-thiopropanesulfonate sodium salt, 3-[(amino-iminomethyl)thio]-1-propanesulfonate sodium salt, o-ethyldithiocarbonato-S-(3-sulfopropyl)-ester sodium salt, 3-(benzothiazolyl-2-mercapto)-propyl-sulfonic acid sodium salt, and ethylenedithiodipropylsulfonic acid sodium salt.

The moderator (component B) includes a non-ionic water-soluble polymer. The moderator (component B) may have a concentration of 0.1 to 10 ppm in the electrolyte 20.

The moderator (component B) reduces an electrodeposition rate of copper to prevent a rapid increase in roughness and a decrease in strength of the copper foil 110. This moderator (component B) is also referred to as an inhibitor or a suppressor.

When the concentration of the moderator (component B) is less than 0. 1 ppm, the roughness of the copper foil 110 rapidly increases, and a problem of a change in the surface condition of the copper foil 110 may occur. On the other hand, even when the concentration of the moderator (component B) exceeds 10 ppm, there is almost no change in the physical properties of the copper foil 110, such as appearance, gloss, roughness, strength, elongation rate, and the like. Accordingly, the concentration of the moderator (component B) may be adjusted to a range of 0. 1 to 10 ppm without increasing manufacturing costs and wasting raw materials by unnecessarily increasing the concentration of the moderator (component B).

The moderator (component B) may include, for example, at least one non-ionic water-soluble polymer selected from polyethylene glycol (PEG), polypropylene glycol, a polyethylene-polypropylene copolymer, polyglycerin, polyethylene glycol dimethyl ether, hydroxyethylene cellulose, polyvinyl alcohol, stearic acid polyglycol ether, and stearyl alcohol polyglycol ether. However, the type of moderator is not limited thereto, and other non-ionic water-soluble polymers which may be used in the manufacture of a high-strength copper foil 110 may be used as moderators.

The leveling agent (component C) includes a polyethylene glycol (PEG) derivative. The leveling agent (component C) may have a concentration of 1 to 10 ppm in the electrolyte 20.

The leveling agent (component C) prevents excessively high peaks or excessively large protrusions from being generated on the copper film 111 so that the copper film 111 becomes macroscopically flat. The leveling agent (component C) may have a concentration of 1 to 10 ppm in the electrolyte 20.

Specifically, in the PEG derivative according to one embodiment of the present disclosure, an end group may be substituted with a saturated hydrocarbon or a functional group. In this case, the functional group may include at least one of an ethylene group, an acrylic group, and a bisphenol group. In this case, PEG means polyethylene glycol.

Specifically, in the case of PEG, generally, a hydroxyl group (-OH) is present as an end group, and the hydroxyl group (-OH) which is present as an end group may react with other additives added in the electrolyte such that the properties of the copper foil may deteriorate.

In this case, when the end group of the PEG derivative is substituted with a saturated hydrocarbon or a functional group including at least one of an ethylene group, an acrylic group, and a bisphenol group, since the end group of the PEG derivative is stabilized, an effect caused by various by-products in the electrolyte due to long-term use may be small. Specifically, there is an advantage in that defects in plating such as pinholes and the like may be reduced compared to an unsubstituted PEG derivative.

When the concentration of the leveling agent (component C) is less than 1 ppm, the strength of the copper foil 110 deteriorates, making it difficult to manufacture a high-strength copper foil 110.

On the other hand, when the concentration of the leveling agent (component C) exceeds 10 ppm, since the surface roughness of the copper foil 110 excessively increases, the strength may deteriorate, and since pinholes or curls occur in the surface of the copper foil 110, it may be difficult to separate the copper foil 110 from a winder WR after manufacturing the copper foil 110.

The leveling agent (component C) may include, for example, at least one of PEG-isodecyl ether, PEG-glyceryl ether, PEG-butyl ether, PEG-hexylene glycol, PEG-trimethylolpropane, PEG-allylether, PEG-methacrylate, PEG-acrylate, PEG-bisphenol A ether.

When the copper film 111 is formed, a flow rate of the electrolyte 20 supplied to the electrolytic cell 10 may be 41 to 45 m³/hour.

FIG. 6 is a schematic diagram illustrating a circulation process of the electrolyte according to the present disclosure.

According to one embodiment of the present disclosure, an operation of preparing the electrolyte may include an operation of filtering (C/F) a first electrolyte transferred from a storage tank using carbon to form a second electrolyte, and an operation of adding the leveling agent (component C) to the filtered second electrolyte to form the electrolyte.

Specifically, the first electrolyte transferred from the storage tank may include copper ions, sulfuric acid, chlorine, an organic additive, and the like.

The process of filtering (C/F) the first electrolyte using carbon means an operation of removing organic and inorganic impurities present in the first electrolyte.

According to one embodiment of the present disclosure, the second electrolyte means an electrolyte in which the first electrolyte has been filtered using carbon.

According to one embodiment of the present disclosure, the leveling agent (component C) may be added to the second electrolyte to form the electrolyte. The additives included in the electrolyte have already been described above and thus will be omitted. Specifically, the leveling agent (component C) is added after the filtering (C/F) process.

For example, when the leveling agent (component C) is added before the filtering (C/F) process, the leveling agent (component C) deteriorates and the physical properties of the copper foil may deteriorate. On the other hand, when the leveling agent (component C) is added after the filtering (C/F) process, the leveling agent (component C) is prevented from deteriorating, which is effective in improving the physical properties according to the present disclosure.

The electrolyte formed by adding the leveling agent (component C) is put in the electrolytic cell 10, and the copper foil is manufactured using a foil manufacturing machine including a rotating anode drum 40 disposed in the electrolytic cell 10 and a cathode plate 30 disposed spaced apart from the rotating anode drum 40.

In addition, in order to maintain the cleanliness of the electrolyte 20, a copper (Cu) wire used as a raw material for the electrolyte 20 may be cleaned.

According to one embodiment of the present disclosure, preparing the electrolyte 20 may include heat-treating a Cu wire, acid-cleaning the heat-treated Cu wire, water-cleaning the acid-cleaned Cu wire, and inputting the water-cleaned Cu wire into sulfuric acid for an electrolyte.

More specifically, in order to maintain the cleanliness of the electrolyte 20, a Cu wire with a high purity (99.9% or more) is heat-treated in an electric furnace at a temperature of 750 °C to 850 °C to burn various organic impurities attached to the Cu wire, the heat-treated Cu wire is acid-cleaned using a 10% sulfuric acid solution for 10 to 20 minutes, and the acid-cleaned Cu wire is then water-cleaned using distilled water, thereby preparing copper for manufacturing the electrolyte 20. The water-cleaned Cu wire may be input into sulfuric acid for an electrolyte to prepare the electrolyte 20.

According to one embodiment of the present disclosure, in order to satisfy the characteristics of the copper foil 110, a concentration of total organic carbon (TOC) in the electrolyte 20 is controlled to be 300 ppm or less. That is, the electrolyte 20 may have a TOC concentration of 300 ppm or less.

The copper film 111 thus prepared may be cleaned in a cleaning bath.

For example, an acid cleaning process for removing impurities on a surface of the copper film 111, for example, resin components or natural oxides, and a water cleaning process for removing acidic solutions used for the acid cleaning may be sequentially performed. The cleaning process may be omitted.

Next, the protective layer 112 is formed on the copper film 111.

Referring to FIG. 5, the method may further include immersing the copper film 111 in an anticorrosion solution 60. When the copper film 111 is immersed in the anticorrosion solution 60, the copper film 111 may be guided by a guide roll disposed in the anticorrosion solution 60.

As described above, the anticorrosion solution 60 may include at least one of a chromium compound, a silane compound, and a nitrogen compound. For example, the copper film 111 may be immersed in a potassium dichromate solution of 1 g/L to 10 g/L at room temperature for 1 to 30 seconds.

Meanwhile, the protective layer 112 may include a silane compound by silane treatment or a nitrogen compound by nitrogen treatment.

The copper foil 110 is formed by forming the protective layer 112.

At least one anode active material selected from the group consisting of carbon, a metal (Me) of Si, Ge, Sn, Li, Zn, Mg, Cd, Ce, Ni or Fe, an alloy including the metal (Me), an oxide (MeOx) of the metal (Me), and a complex of the metal (Me) and carbon is coated on one surface or both surfaces the copper foil 110 of the present disclosure prepared through the method as described above to prepare an electrode (i.e., anode) for a secondary battery of the present disclosure.

For example, 1 to 3 parts by weight of styrene butadiene rubber (SBR) and 1 to 3 parts by weight of carboxymethyl cellulose (CMC) are mixed with 100 parts by weight of carbon for an anode active material to prepare a slurry using distilled water as a solvent. Subsequently, the slurry is applied to the copper foil 110 using a doctor blade to a thickness of 20 µm to 60 µm and pressed at 110 °C to 130 °C and at a pressure of 0.5 to 1.5 ton/cm².

A secondary battery may be manufactured using the electrode (anode) for a secondary battery of the present disclosure prepared through the method as described above, together with the conventional cathode, electrolyte, and separator.

Hereinafter, the present disclosure will be described in detail with reference to examples and comparative examples. However, the examples described below are only for the understanding of the present disclosure, and the scope of the present disclosure is not limited to these manufacturing examples.

### Examples 1 to 4 and Comparative Examples 1 to 4

A copper foil was manufactured using a foil manufacturing machine including an electrolytic cell 10, a rotating anode drum 40 disposed in the electrolytic cell 10 and a cathode plate 30 disposed spaced apart from the rotating anode drum 40. An electrolyte 20 is a copper sulfate solution. A concentration of copper ions in the electrolyte 20 was set to 87 g/L, a concentration of sulfuric acid was set to 110 g/L, a temperature of the electrolyte was set to 55°C, and a current density was set to 60 ASD.

Further, a concentration of chlorine (Cl) in the electrolyte 20 was maintained at 20 ppm, and a concentration of an organic additive is as shown in Table 1 below. In this case, the leveling agent was added to a filtered electrolyte after filtering the electrolyte using carbon.

Among the organic additives, bis-(3-sulfopropyl)-disulfide disodium salt (SPS) was used as a polishing agent (component A), polyethylene glycol (PEG) was used as a moderator (component B), and PEG-methacrylate was used as a leveling agent (component C).

The copper film 111 was manufactured by applying a current at a current density of 60 ASD between the rotating anode drum 40 and the cathode plate 30. Next, the copper foil was manufactured by immersing the copper film 111 in an anticorrosion solution for about 2 seconds and performing chromate treatment on both surfaces of the copper film 111 to form a protective layer 112. An anticorrosion solution using a chromic acid as a main component was used as the anticorrosion solution, and the concentration of chromic acid was 5 g/L.

As a result, the copper foils of Examples 1 to 4 and Comparative Examples 1 to 4 were manufactured. In this case, a thickness of the manufactured copper foil is 8 µm.

**[Table 1]**

| | SPS (ppm) | PEG (ppm) | PPG-methacrylate (ppm) |
|---|---|---|---|
| Example 1 | 12 | 5 | 3 |
| Example 2 | 19 | 5 | 8 |
| Example 3 | 6 | 5 | 3 |
| Example 4 | 2 | 12 | 8 |
| Comparative Example 1 | 5 | 5 | 0.1 |
| Comparative Example 2 | 5 | 5 | 20 |
| Comparative Example 3 | 50 | 5 | 20 |
| Comparative Example 4 | 5 | 50 | 0 |

**[Table 2]**

| Classificatio n | Carbon (C) (at%) | Nitrogen (N) (at%) | Oxygen (O) (at%) | Sulfur (S) (at%) | Whether curling occurred |
|---|---|---|---|---|---|
| Example 1 | 0.14 | 0.03 | 0.15 | 0 | Did not occur |
| Example 2 | 0.10 | 0.02 | 0.25 | 0 | Did not occur |
| Example 3 | 0.11 | 0.03 | 0.30 | 0 | Did not occur |
| Example 4 | 0.08 | 0.02 | 0.25 | 0 | Did not occur |
| Comparativ e Example 1 | 10.0 | 0.92 | 15.90 | 0.01 | Occurred |
| Comparativ e Example 2 | 10.6 | 0.32 | 5.5 | 0.02 | Occurred |
| Comparativ e Example 3 | 11.3 | 1.10 | 13.5 | 0.01 | Occurred |
| Comparativ e Example 4 | 3.5 | 1.45 | 17.2 | 0.02 | Occurred |

i) For the copper foils of Examples 1-4 and Comparative Examples 1-4 manufactured as described above, the contents of non-copper elements (carbon, nitrogen, oxygen, and sulfur) and ii) whether curling occurred were checked.

A 2 x 2 cm sample was acquired by cutting the copper foil. The contents of the non-copper elements were measured after removing a protective layer on the copper film. In this case, in order to remove the protective layer on the copper film, the copper film was immersed in a 10% sulfuric acid solution for 30 seconds, water cleaning using distilled water was performed for 30 seconds to remove the acid solution, and then drying was performed at room temperature for 24 hours.

### i) Contents of non-copper elements (carbon, nitrogen, oxygen, and sulfur)

The content of the non-copper elements in the copper film was measured for the matte surface of the copper film using XPS [product name: PHI 5000 VersaProbe (ULVAC PHI)]. Specifically, the contents of non-copper elements mean contents from the matte surface of the copper film to a sputter depth of 100 nm.

In this case, the specific conditions are as follows.
- X-ray beam size: 400 µm
- Neutralizer: off
- Sputter source: Ar+
- Ion energy: 2Kv
- Sputter area: 1 mm x 1 mm
- Sputter rate: 0.5 nm/sec (based on SiO₂)

### ii) Whether curling occurred

Whether curling occurred in the copper foil was observed by disassembling the secondary battery after 100 times of charging and discharging. A case in which curling occurred in the copper foil was marked as "Occurred" and a case in which curling did not occur in the copper foil was marked as "Did not occur."

Referring to Tables 1 and 2, curling did not occur in the copper foils according to Examples 1 to 4, and curling occurred in the copper foils according to Comparative Examples 1 to 4.

In a copper foil according to the present disclosure, curling can be prevented from occurring. As intermediate parts and final products such as a flexible printed circuit board (FPCB), a secondary battery, and the like are manufactured using the copper foil, the productivity of not only the intermediate parts but also the final products can be enhanced.

It will be apparent to those skilled in the art that the present disclosure described above is not limited by the above-described embodiments and the accompanying drawings and that various substitutions, modifications, and variations can be made in the present disclosure without departing from the scope of the present disclosure. Accordingly, the scope of the present disclosure is defined by the accompanying claims, and it is intended that all variations and modifications derived from the meaning, scope, and equivalent concept of the claims fall within the scope of the present disclosure.

## Claims

1. A copper foil comprising:
a copper film having a matte surface and a shiny surface; and
a protective layer disposed on the copper film,
wherein the copper film includes copper and non-copper elements, and
the non-copper elements include carbon (C), nitrogen (N), and oxygen (O).

2. The copper foil of claim 1, wherein the copper film includes 0.05 to 0.2 at% of carbon (C), 0.01 to 0.05 at% of nitrogen (N), 0.1 to 0.5 at% of oxygen (O), and less than 0.01 at% of sulfur (S).

3. The copper foil of claim 1 or 2, wherein the copper film does not include sulfur (S).

4. The copper foil of claim 1, 2 or 3, wherein the protective layer includes at least one of a chromium compound, a silane compound, and a nitrogen compound.

5. A method of manufacturing a copper foil, comprising:
preparing an electrolyte including copper ions;
forming a copper film; and
forming a protective layer on the copper film,
wherein the forming of the copper film includes allowing a cathode plate and a rotating anode drum disposed to be spaced apart from each other in an electrolyte in an electrolytic cell to conduct current to form the copper film on the rotating anode drum,
the electrolyte includes: 70 to 150 g/L of copper ions; 80 to 150 g/L of sulfuric acid; 15 to 25 ppm of chlorine (Cl); and an organic additive,
the organic additive includes a polishing agent (component A), a moderator (component B), and a leveling agent (component C), and
the leveling agent (component C) includes a polypropylene glycol (PPG) derivative.

6. The method of claim 5, wherein:
the polishing agent (component A) includes sulfonic acid or a metal salt thereof; and
the moderator (component B) includes a non-ionic water-soluble polymer.

7. The method of claim 5 or 6, wherein, in the PPG derivative, an end group is substituted with a saturated hydrocarbon or a functional group.

8. The method of claim 7, wherein the functional group is at least one of an ethylene group, an acrylic group, and a bisphenol group.

9. The method of claim 5, 6, 7 or 8, wherein the preparing of the electrolyte includes:
filtering a first electrolyte transferred from a storage tank using carbon to form a second electrolyte; and
adding the leveling agent (component C) to the second electrolyte to form the electrolyte.
